# EUROPEAN PATENT APPLICATION

(11) **EP 4 311 661 A1**
(43) Date of publication of application: **31.01.2024**
(21) Application number: 22187752.5
(22) Date of filing: 29.07.2022
(51) Int. Cl.: B29C 70/54, B29D 99/00, B29C 70/30, B29C 65/78, B29B 11/06, B29B 11/16, B29C 70/34, B29L 31/08

(54) **METHOD FOR MANUFACTURING A PREFORM ELEMENT FOR A BLADE OF A WIND TURBINE, PREFORM ELEMENT, BLADE OF A WIND TURBINE AND WIND TURBINE**

(71) Applicant: Siemens Gamesa Renewable Energy A/S, 7330 Brande (DK)
(72) Inventor: Nielsen, Mogens, 9220 Aalborg (DK)
(74) Representative: SGRE-Association

(57) **Abstract**

Method for manufacturing a preform element (7) for a blade (2) of a wind turbine (1), comprising the steps:
a) Arranging a preform element building material (17, 26) comprising a curable binding agent on a molding surface (11) of a mold (10) such that the shape of the preform element building material (17, 26) adapts to the shape of the molding surface (11),
b) Arranging at least one shaping element (22) on or at the preform element building material (17, 26) such that a shaping surface of the shaping element (22) defines a contact surface of the preform element (7), wherein the shape of the shaping surface corresponds to a contact surface of a blade component arranged in contact with the contact surface of the preform element (7) in the manufactured blade (2), and
c) Curing the preform element building material (17, 26) to conserve the shape of the preform element (7) which is defined by the molding surface (11) and the shaping element (22) .

## Description

The invention relates to a method for manufacturing a preform element for a blade of a wind turbine.

Wind turbines usually comprise a rotor with a plurality of rotor blades, generally for converting wind energy into electrical energy by means of a generator. Due to the enormous size of the wind turbine blades, their manufacturing is a major challenge for manufacturers of wind turbines.

One technology for facilitating the fabrication of wind turbine blades is the usage of preform building elements, or preform elements, respectively. The preform elements are preformed parts or segments of the blade which are used particularly for building the respective blade shell. For fabricating the blade, several preform elements and particularly other parts of the blade are arranged like beams in a blade half mold. After the respective parts of the blade are attached to each other by, e.g., gluing and/or infusing resin, they typically constitute the outer skin of the blade. Finally, two blade half molds are closed to build the final blade.

The preform element may be fabricated in a mold used for arranging and attaching the components of the preform element. The preform element may comprise a plurality of layers, particularly fibre mats or sheets and/or core materials. The core material may be a flexible or rigid wooden plate, e.g. of balsa wood.

In many cases, preform elements are manufactured separately and independently from each other. However, when they are stacked on top of each other in the blade half mold, they should fit together as good as possible. Particularly, if the preform elements have been manufactured in different molds, there is the risk that the geometry of these preform elements do not match perfectly. These differences of the respective shapes can cause delamination, wrinkles or spots without a cured binding agent. Hence, the mechanical strength and durability of the blade could be reduced. The same problem can occur if a blade component like a beam or a spar-cap is sandwiched between two preform elements in the final blade. Also in this case, the shape of the preform elements have to fit to each other and to the shape of the blade component.

Hence, it is an object of the invention to provide an enhanced concept for manufacturing a preform element for a blade of a wind turbine, particularly with respect to the addressed issue.

According to the invention, this problem is solved by a method as initially described with the following steps:
a) Arranging a preform element building material comprising a curable binding agent on a molding surface of a mold such that the shape of the preform element building material adapts to the shape of the molding surface,
b) Arranging at least one shaping element on or at the preform element building material such that a shaping surface of the shaping element defines a contact surface of the preform element, wherein the shape of the shaping surface corresponds to a contact surface of a blade component arranged in contact with the contact surface of the preform element in the manufactured blade, and
c) Curing the preform element building material to conserve the shape of the preform element which is defined by the molding surface and the shaping element.

The preform element building material constitutes or forms the preform element which is finally used for building the final blade. In the method according to the invention, the preform element building material is arranged such that is in contact with the shaping element and with the molding surface. The geometry of a part of the surface of the preform element building material is defined by the molding surface. Typically, the mold and its surface comprise a rigid structure such that the shape of the preform element building material adapts the shape of the mold surface.

The invention is based on the idea that the contact surface of the preform element or the preform element building material, respectively, and the respective shaping surface of the shaping element automatically fit to each other since these surfaces are in contact with each other. As a consequence, the contact surface of the preform element building material and the shaping surface of the shaping element form negatives and complementary surfaces to each other. Hence, the shaping element acts as a shape forming element for the preform element building material. Since the shape of the shaping surface of the shaping element equals the shape of the contact surface of the blade component to be connected to the preform building element when the blade is manufacturred, the preform element and the blade component match each other perfectly in the final blade.

The shaping element can comprise a rigid structure. The shaping element can be used either as a part of the final blade or as the blade component, respectively, or as a "dummy element", i.e., an element which constitutes a copy of the blade component, which can be particularly used for several molding processes of several preform elements. The overall geometry of the shaping element can correspond to the geometry of the blade component. However, only a part of the shaping element can constitute the contact surface.

After the preform element building material is cured or hardened, respectively, the preform element building material constitutes the preform. The preform element is taken out of the mold and can be separated from the shaping element. Since the binding agent has been cured, the contact surface of the preform element remains stable and the preform element can be stored or transported to the blade mold to be further processed to manufacture the final blade.

In a preferred embodiment of the invention, at least one first preform element building material is arranged on the molding surface, wherein the shaping element is or comprises at least one second preform element building material which is arranged on or at the first preform element building material. In this embodiment, two preform elements which are in contact with each other in the final blade are manufactured together and simultaneously such that their contact surfaces automatically define each other and, hence, fit together in the manufactured blade where these preform elements are located adjacently. Hence, and particularly in this embodiment, the shaping element itself can be a part of the final blade. In this embodiment, the shaping element comprises a flexible structure such that it does not comprise a defined shape which is transferred to the preform element building material, but the shape of the preform element building material and the shaping element adapt to each other. Thus, the shaping element acts as a shape forming element for the preform element building material and vice versa.

A further shaping element can be sandwiched between the first preform element building material and the second preform element building material. Additional to the shaping process of the first and the second preform element building material as described in the previous paragraph, the contact surfaces of each of the preform element building materials which are in contact with the respective shaping surface of the, preferably rigid, further shaping element adapt to each other. In this embodiment, the shapes of the first preform element formed by the first preform element building material, the second preform element formed by the second preform element building material and the further shaping element or the respective further blade component match with each other.

The shape of the shaping surface of the shaping element can correspond to the shape of the contact surface of the blade component which can be a spar cap or a beam, i.e., a component which extend along the longitudinal direction of the final blade and which constitute at least a part of the mechanical stability of the blade. The blade component can be a component of a blade root or a core which is particularly made of wood like balsa wood and/or polymer material, e.g., polyethylene terephthalate (PET) and/or solidified polymer foam, which can comprise glass-, carbon-, and/or aramid fibres.

The shaping element can be tapered and be arranged laterally on the preform element building material and between the mold surface and the preform element building material, wherein the blade component is a further preform element which is arranged laterally adjacent to the preform element in the manufactured blade, wherein the contact surface of the blade component is tapered. Hence, the shaping element is placed on the mold surface such that the lateral part of the preform element building material overlaps the shaping element. In the final blade, the respective part of the preform element overlaps another preform element which is arranged adjacently to the preform element and which comprises a complementary edge.

The preform element building material can be arranged between a lower vacuum foil and an upper vacuum foil, wherein a vacuum is created between the mold surface and the lower vacuum foil and between the lower vacuum foil and the upper vacuum foil. In this embodiment, the lower vacuum foil is be located on the mold surface, wherein the preform element building material is arranged on the lower vacuum foil. Next, the upper vacuum foil is located on top of the preform element building material. The vacuum foils can be attached to the mold using a double-sided adhesive tape or a butyl band, respectively. The space below the lower vacuum foil, i.e., between the mold surface and the lower vacuum foil, and below the upper vacuum foil is sealed hermetically to allow for creating a vacuum below the lower vacuum foil and below the upper vacuum foil. This leads to a tight fit between the mold surface and the lower vacuum foil and between the preform element building material and the vacuum foils to ensure a plane and smooth surface of the final preform element. After evacuating the vacuum, the vacuum foils can be welded together to form a vacuum-tight airbag for the preform element building material. The upper and the lower vacuum foil define or limit the space of the final preform element.

If the or a first preform element building material and the or a second preform element building material is provided, the first preform element building material can be arranged between a first lower vacuum foil and a first upper vacuum foil, wherein the second preform element building material can be arranged between a second lower vacuum foil and a second upper vacuum foil, wherein a vacuum is created between the mold surface and the first lower vacuum foil, between the first lower vacuum foil and the first upper vacuum foil, between the first upper vacuum foil and the second lower vacuum foil and between the second vacuum foil and the second upper vacuum foil. All aspects which have been described in the previous paragraph regarding the lower and the upper vacuum foil holds true for the first lower and the first upper vacuum foil in this embodiment. Regarding the second lower and the second upper vacuum foil, these aspects also hold true apart from the fact that the second lower vacuum is not located on the mold surface but on the fist upper vacuum foil. If the or a further shaping element is sandwiched between the first preform element building material and the second preform element building material, this element can be located between the first upper and the second lower vacuum foil.

To ensure that air between the mold surface and the lower vacuum foil or between the first upper vacuum foil and the second lower vacuum foil is removed completely, particularly to avoid localized air-islands while creating the respective vacuum, an air transportation layer can be arranged between the mold surface and the lower vacuum foil and/or between the first upper vacuum foil and the second lower vacuum foil. The air transportation layer can consist of an open, porous material that allow air to be removed over the complete area between the respective surfaces without getting air-islands. The air transportation layer acts as a "breather layer".

To create the vacuum between two respective foils, at least one of the vacuum foils can comprise a, particularly valve-like, outlet which can be connected with a vacuum pump. The outlet is preferably arranged at a lateral section of the vacuum foil such that it is not covered by other layers of preform element building material and/or further vacuum foils. The outlet and the region between the two vacuum foils where the vacuum is evacuated can be connected via an air path element, e.g., a porous strip or tube, which allows air to migrate through.

The preform element building material can comprise at least one layer, particularly several stacked layers, made of fibre sheet and/or a rigid core material. The fibre sheet or material, respectively, can comprise glass-, carbon-, and/or aramid fibres. The binding agent can be applied on the surface of the fibre sheet. The rigid core material can consist of balsa wood and/or polymer material, e.g., polyethylene terephthalate (PET) and/or solidified polymer foam, and con provide at least a part or the main part of the mechanical stability of the preform element.

The binding agent can be a heat-meltable powder binder. By applying thermal energy or heat to the powder binder, it is melted or softened up or fluidized, respectively. The binder or adhesive distributes over the preform element building material, e.g., over the layers and particularly the respective fibres. Cooling the binder causes a curing of the melted material such that the preform element material, particularly the several layers, is adhered and stiffened.

The present invention is further related to a preform element for a blade of a wind turbine, manufactured by a method according to the previous description. The advantages and details of the method according to the invention apply correspondingly on the preform element according to the invention.

Additionally, the present invention is related to a blade of a wind turbine comprising at least one preform element according to the invention. The advantages and details of the method and the preform element according to the invention apply correspondingly on the blade according to the invention.

Finally, the present invention is related to a wind turbine comprising at least one blade according to the invention. The advantages and details of the method, the preform element and the blade according to the invention apply correspondingly on the wind turbine according to the invention.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: an embodiment of a wind turbine according to the invention with three blades according to the invention, wherein each of the blades comprises several preform elements according to the invention,
- Fig. 2 - 3: a cross-sectional view of one of the blades of the wind turbine of fig. 1 according to two different embodiments, wherein the cutting line is indicated by II - II in fig. 1,
- Fig. 4 - 10: schematical depictions of the steps of manufacturing preform elements of the blade of fig. 2 or 3 to illustrate a first embodiment of the method according to the invention,
- Fig. 11 - 13: schematical depictions of the steps of manufacturing a second embodiment of the inventive preform element to illustrate a second embodiment of the method according to the invention,
- Fig. 14: a cross-sectional view of the configuration of fig. 12, wherein the cutting line is indicated by XIV - XIV in fig. 12, and
- Fig. 15: a cross-sectional view through a blade half mold with several preform elements which have been manufactured by the method as described with the help of figures 11 - 14.

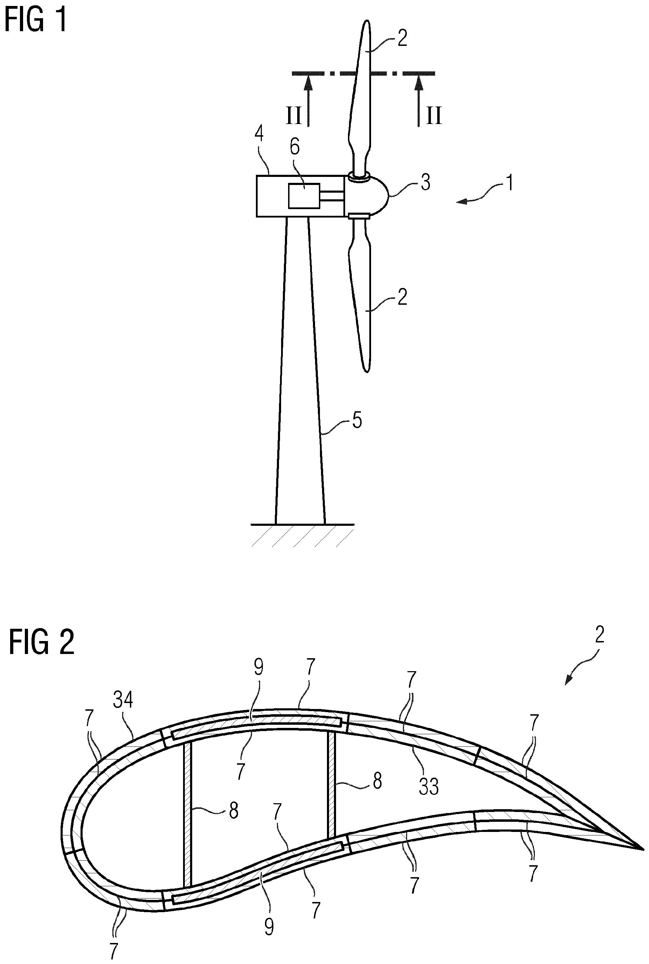

In fig. 1, an embodiment of a wind turbine 1 according to the present invention is shown. The wind turbine 1 comprises three blades 2 according to the present invention which are attached to a hub 3 of the wind turbine 1. The hub 3 is mounted on the front side of a nacelle 4 which is supported by a tower 5 and houses a generator 6 for generating electrical energy from the wind-induced rotation of the blades 2 and the hub 3.

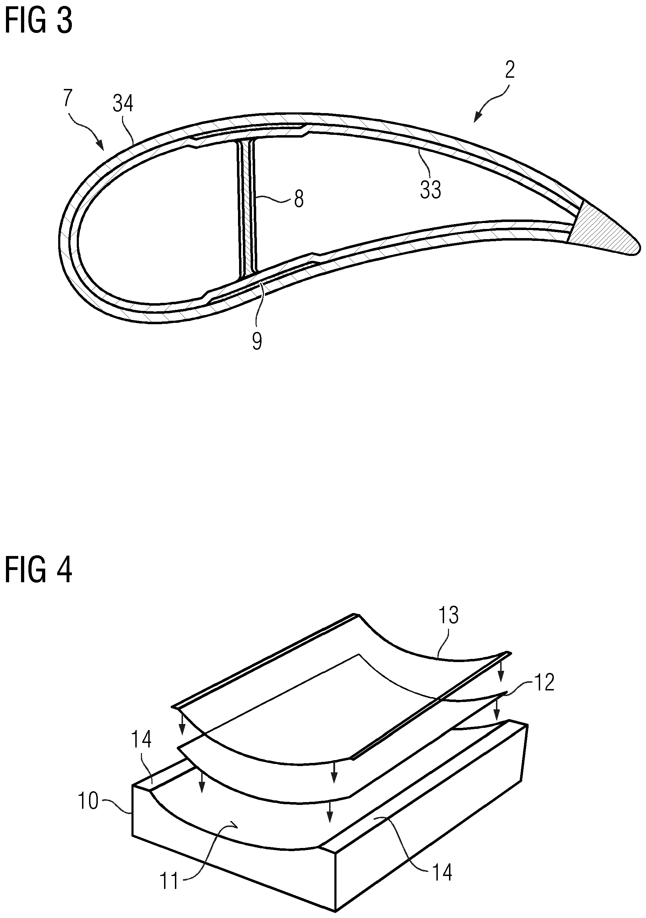

Fig. 2 shows a cross-sectional view of one of the blades 2, wherein the crossing line is indicated by the line II - II in fig. 1. The blade 2 comprises several preform elements 7 which constitute the blade 2 or its outer skin, respectively. The blade 2 comprises several sections, wherein in each section two preform elements 7 are stacked upon each other. At a section of the blade 2, where shear webs 8 of the blade 2 are located, a spar cap 9 is arranged or sandwiched between two stacked preform elements 7. When manufacturing the blade 2, it is a main task that the shapes of the two preform elements 7 which are stacked upon each other, particularly with the spar cap 9 sandwiched in between, fit together as good as possible. In the following, an embodiment of the manufacturing process according to the present invention, namely to manufacture the pair of preform elements 7 with the spar cap 9 in between, will be described by help of figures 3 to 9.

While the blade 2 of fig. 2 is a blade comprising two shear webs, fig. 3 shows a cross sectional view of another possible embodiment of the blade 2 according to the invention, namely a blade with a single web, e.g. a blade manufactured using an integral blade technology, which is often used for wind turbines 1 in an offshore environment. In this embodiment, the web 8 is centrally located on the beam or spar cap 9. The blade 2 also consists of one or several preform elements 7 which constitute an inner skin 33 and an outer skin 34 of the blade 2.

As shown in fig. 4, a mold 10 with a mold surface 11 is provided. The mold surface 11 is cleaned and an air transportation layer 12, i.e., a "breathable" sheet which consists of a porous material to allow air to pass through, is laid on the mold surface 11. Next, a first lower vacuum foil 13 is arranged on top of the air transportation layer 12.

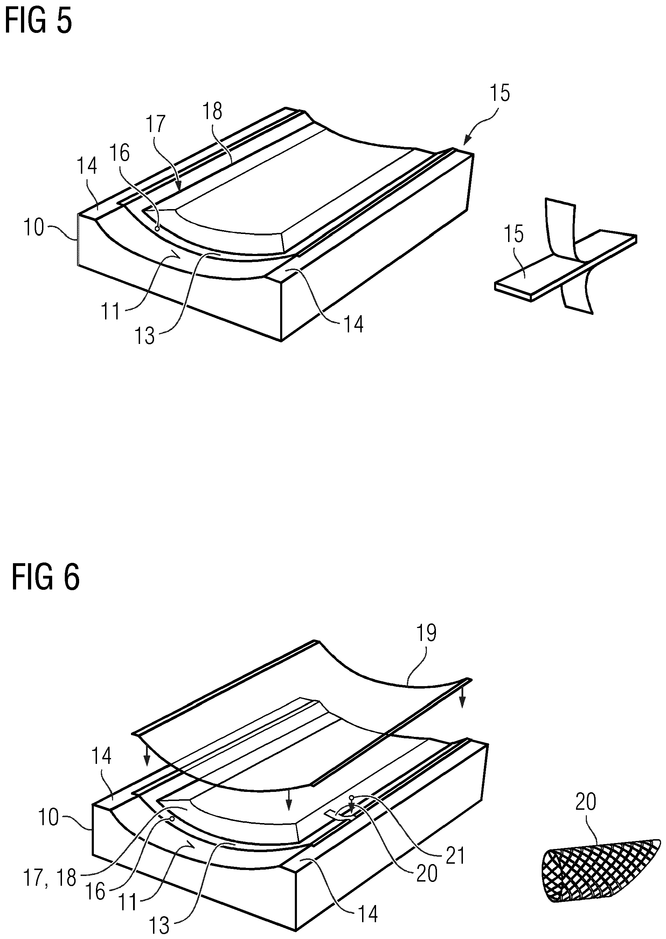

As shown in fig. 5, in the next step, the first lower vacuum foil 13 is sealed, e.g., by a butyl band 15 or tape which is placed at an edge 14 of the mold 10. Fig. 5 additionally shows an enlarged view on the butyl band 15 which acts as a double-sided adhesive tape.

To create a vacuum between the mold surface 11 and the first lower vacuum foil 13, a vacuum pump (not shown) is connected with a valve-like first outlet 16 of the first lower vacuum foil 13. The air transportation layer 12 ensures that the air is removed from the area between the mold surface 11 and the first lower vacuum foil 13 uniformly, particularly to prevent the formation of air-islands between these layers. Creating the respective vacuum ensures that the foil 13 and, hence, the final preform element 7 follows the geometry of the mold surface 11.

Next, again referring to fig. 5, a first preform element building material 17 is located on the first lower vacuum foil 13. Alternatively, several, particularly stacked first preform element building materials 17 can be provided. In fig. 5, the first preform element building material 17 is a fibre sheet 18 which consists of glass-, carbon- and/or aramid fibres and which comprises a curable binding agent, namely a heat-meltable powder binder. Additionally or alternatively, the first preform element building material 17 can comprise or consist of a rigid core material which is made of, e.g., balsa wood or a polymer.

Next, referring to fig. 6, a first upper vacuum foil 19 is arranged on top of the first preform element building material 17. Between the first preform element building material 17 and the first upper vacuum foil 19, an air path element 20 is arranged. The "breathable" air path element 20 consists of a porous material to allow air to pass through and is, as can be seen in the enlarged section of fig. 6, as a porous tube. The air path element 20 allows air to migrate from the space between the first lower vacuum foil 13 and the first upper vacuum foil 19 to a valve-like second outlet 21 which is located on the edge 14 of the mold 10 on the first upper vacuum foil 19.

Next, the first upper vacuum foil 19 is sealed, e.g., by the butyl band 15. Next, the vacuum pump is connected with the second outlet 21 to create a vacuum between the first vacuum foils 13, 19. After this, the foils 13, 19 are welded together or sealed otherwise to form a vacuum tight bag surrounding the first preform element building material 17. Because of the vacuum between the mold surface 11 and the first lower vacuum foil 13 and between the lower vacuum foils 13, 19, the shape of the first preform element building material 17 fits the shape of the mold surface 11.

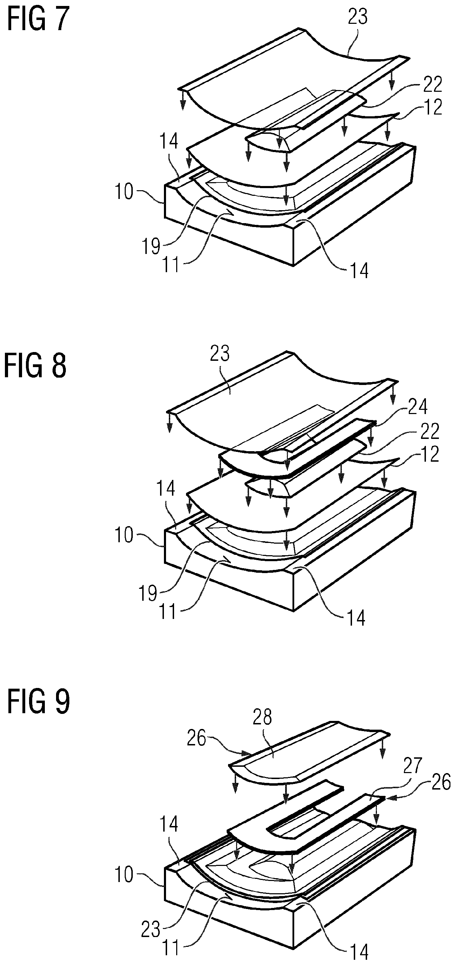

Next, referring to fig. 7, another air transportation layer 12 is located on top of the first upper vacuum foil 19. On top of this layer 12, a shaping element 22 is placed. The shape of the shaping element 22 corresponds to the shape of the spar cap 9. Alternatively, the shape of the shaping element 22 can correspond to the shape of a beam or a component of a blade root or other components which are typically located at the respective position in the final blade 2. Next, a second lower vacuum foil 23 is located on top of the shaping element 22.

Fig. 8 shows a possible alternative to the step which has been described with the help of fig. 7. In this alternative, the shaping element 22 is surrounded by a core 24 which consists of, e.g., balsa wood, and which avoids steep transition areas of the preform elements 7. The core 24 also acts as a shaping element for the preform elements 7.

A valve-like third outlet 25 of the second lower vacuum foil 23 is provided to establish a vacuum between the first upper vacuum foil 19 and the second lower vacuum foil 23 to ensure that the shape of the second lower vacuum foil 23 fits the shape of the first upper vacuum foil 19, the shaping element 22 and, particularly, the core 24. After this, the second lower vacuum foil 23 is sealed by the butyl band 15.

Next, as can be seen in fig. 9, a second preform element building material 26 is placed on top of the second lower vacuum foil 23. The second preform element building material 26 is a core material 27 consisting of balsa wood and a fibre sheet 28. Optionally, if a balsa core 24 has already arranged between the first upper vacuum foil 19 and the second lower vacuum foil 23 (see fig. 8), the core material 27 can be skipped.

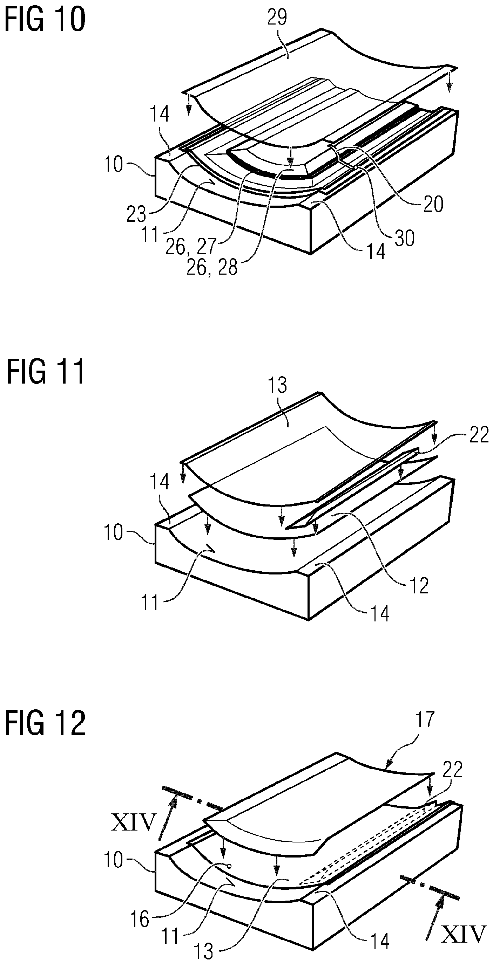

Next, as it is shown in fig. 10, a second upper vacuum foil 29 is placed on top of the second preform element building material 26 and sealed on the edge 14 of the mold 10 by the butyl band 15. A valve-like fourth outlet 30 together with another air path element 20 is provided between the upper vacuum foils 23, 29. Air is then evacuated from the space between the vacuum foils 23, 29 to ensure that the shape of the second upper vacuum foil 29 fits the shape of the second lower vacuum foil 23 and the second preform element building material 26. The vacuum foils 23, 29 are then sealed to form a vacuum tight bag for the second preform element building material 26.

After this, packing the respective layers on the mold 10 is finished. The lower vacuum foils 13, 19 constitute a first vacuum bag for the first preform element building material 17 and the upper vacuum foils 23, 29 constitute a second vacuum bag for the second preform element building material 26. In the present configuration, the vacuums ensure that the geometrical shapes of the preform element building materials 17, 26 fit to each other as well as to the shape of the shaping element 22.

Next, heat is applied to this configuration to melt the powder binder of the preform element building materials 17, 26. This is preferably done by the shaping element 22 which can additionally act as a heating element with resistance heating means. Since the preform element building materials 17, 26 might be not equally thick, at thinner areas of these components, heat shielding elements which might be a part of the shaping element 22 as well could have been arranged during stacking the layers, particularly during the step of fig. 6. Particularly, in the edges of the preform element building materials 17, 26, less heat is necessary to activate the curable binding agent than in the central part of the preform element building materials 17, 26. The heat shielding elements ensure a uniform melting of the powder binder.

After heating, the respective configuration is cooled down such that the powder binder adheres the several layers of the preform element building materials 17, 26 to constitute the final preform element 7. The mold 10, the air transportation layers 12, the reusable shaping element 22 and the vacuum foils 13, 19, 23, 29 are removed and the final preform elements 7, namely an inner and an outer skin element, is finished. Next, the blade 2 is manufactured using the preform elements 7 which are arranged on a blade half mold (not shown) with the spar cap 9 sandwiched in between.

Next, another manufacturing process of a preform element 7 according to the invention will be described with the help of figures 11 to 13. Referring to fig. 11, the mold 10 with a mold surface 11 is provided, the mold surface 11 is cleaned and the air transportation layer 12 is positioned on the mold surface 11 (see also fig. 4 and the respective description). Next, a lower vacuum foil 13 is arranged on top of the air transportation layer 12 and sealed on the edge 14 of the mold 10 by the butyl band 15. Additionally, a tapered or wedge-like shaping element 22 is arranged between the air transportation layer 12 and the lower vacuum foil 13 such that it is arranged laterally on the preform element building material 17 and between the mold surface 11 and the preform element building material 17 (see fig. 12). Using the first outlet 16, a vacuum is established between the mold surface 11 and the first lower vacuum foil 13.

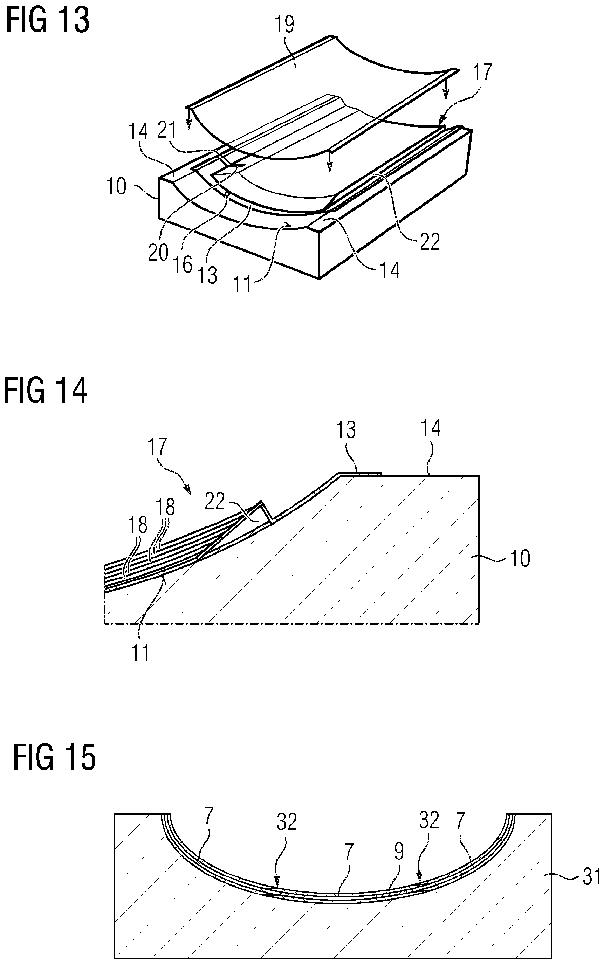

As can be seen with the help of fig. 14, which is a cross sectional view through the configuration of fig. 12 along the line XIV - XIV, the preform element building material 17 consists of several stacked fibre sheets 18. The fibre sheets 18 comprises equal widths such that on the other edge (not shown in fig. 14) of the preform element building material 17, the same shape as provided by the shaping element 22 automatically results.

Next, as can be seen in fig. 13, the upper vacuum foil 19 is arranged on top of the preform element building material 17 and sealed on the edge 14. The vacuum is then evacuated between the vacuum foils 13, 19 by the second outlet 21 and the vacuum foils 13, 19 are then welded together.

Optionally, the steps which have been explained with the help of figures 7 to 10 can then be performed also in this embodiment.

Next, heat is applied to this configuration, particularly by the mold 10 which is used as a heating means to activate the powder binder. After cooling down and curing the binding agent, the air transportation layer 12, the reusable tapered shaping element 22 and the vacuum foils 13, 19 are removed.

As can be seen in fig. 15, to manufacture the blade 2, several preform elements 7 which have been manufactured as described in the previous sections with the help of figures 11 to 14 are arranged laterally adjacent to each other in a blade half mold 31 for the blade 2. Since the preform elements 7 comprise corresponding tapered lateral sections 32 which have been shaped by the tapered shaping element 22, the preform elements 7 fit together perfectly at their edges.

Although the present invention has been described in detail with reference to the preferred embodiment, the present invention is not limited by the disclosed examples from which the skilled person is able to derive other variations without deviating from the scope of the invention.

## Claims

1. Method for manufacturing a preform element (7) for a blade (2) of a wind turbine (1), comprising the steps:
a) Arranging a preform element building material (17, 26) comprising a curable binding agent on a molding surface (11) of a mold (10) such that the shape of the preform element building material (17, 26) adapts to the shape of the molding surface (11),
b) Arranging at least one shaping element (22) on or at the preform element building material (17, 26) such that a shaping surface of the shaping element (22) defines a contact surface of the preform element (7), wherein the shape of the shaping surface corresponds to a contact surface of a blade component arranged in contact with the contact surface of the preform element (7) in the manufactured blade (2), and
c) Curing the preform element building material (17, 26) to conserve the shape of the preform element (7) which is defined by the molding surface (11) and the shaping element (22).

2. Method according to claim 1, **characterized in that** at least one first preform element building material (17) is arranged on the molding surface (11), wherein the shaping element (22) is or comprises at least one second preform element building material (26) which is arranged on or at the first preform element building material (17).

3. Method according to claim 2, **characterized in that** a further shaping element (22) is sandwiched between the first preform element building material (17) and the second preform element building material (26).

4. Method according to one of the preceding claims, **characterized in that** the shape of the shaping surface of the at least one shaping element (22) corresponds to the shape of the contact surface of the blade component being a spar cap (9) or a beam or a component of a blade root or a core (24).

5. Method according to one of the preceding claims, **characterized in that** the at least one shaping element is a tapered shaping element (22) and wherein the tapered shaping element (22) is arranged laterally on the preform element building material (17) and between the mold surface (11) and the preform element building material (17), wherein the blade component is a further preform element (7) which is arranged laterally adjacent to the preform element (7) in the manufactured blade (2), wherein the contact surface of the blade component is tapered.

6. Method according to one of the preceding claims, **characterized in that** the preform element building material (17) is arranged between a lower vacuum foil (13) and an upper vacuum foil (19), wherein a vacuum is created between the mold surface (11) and the lower vacuum foil (13) and between the lower vacuum foil (13) and the upper vacuum foil (19).

7. Method according to one of the claims 2 or 3 and to claim 6, **characterized in that** the first preform element building material (17) is arranged between a first lower vacuum foil (13) and a first upper vacuum foil (19), wherein the second preform element building material (26) is arranged between a second lower vacuum foil (23) and a second upper vacuum foil (29), wherein a vacuum is created between the mold surface (11) and the first lower vacuum foil (13), between the first lower vacuum foil (13) and the first upper vacuum foil (19), between the first upper vacuum foil (19) and the second lower vacuum foil (23) and between the second lower vacuum foil (23) and the second upper vacuum foil (29).

8. Method according to one of the preceding claims, **characterized in that** the preform element building material (17, 26) comprises at least one layer, particularly several stacked layers, made of a fibre sheet (18, 28) and/or a rigid core material (27).

9. Method according to claim 8, **characterized in that** the binding agent is a heat-meltable powder binder.

10. Preform element for a blade (2) of a wind turbine (1), manufactured by a method according to one of the preceding claims.

11. Blade of a wind turbine (1), comprising at least one preform element (7) according to claim 10.

12. Wind turbine comprising at least one blade (2) according to claim 11.
